# EUROPÄISCHE PATENTANMELDUNG

(11) **EP 3 048 497 A1**
(43) Veröffentlichungstag der Anmeldung: **27.07.2016**
(21) Anmeldenummer: 15152008.7
(22) Anmeldetag: 21.01.2015
(51) Int. Cl.: G05B 19/042, G05B 9/03, G06F 11/20

(54) **Verfahren zum Betreiben eines redundanten Automatisierungssystems und redundantes Automatisierungssystem**

(71) Anmelder: Siemens Aktiengesellschaft, 80333 München (DE)
(72) Erfinder: Grosch, Thomas, 90574 Roßtal (DE); Renschler, Albert, 76275 Ettlingen (DE)

(57) **Zusammenfassung**

Die Erfindung betrifft ein Verfahren zum Betreiben eines redundanten, mit einem ersten und einem zweiten Teilsystem (Ta, Tb) versehenen Automatisierungssystems (As), welche während der Steuerung eines technischen Prozesses jeweils ein Steuerprogramm synchron verarbeiten, wobei die Teilsysteme (Ta, Tb) sich über Kommunikationsmittel miteinander synchronisieren, wobei ferner eines dieser Teilsysteme (Ta, Tb) die Prozesssteuerung übernimmt und wobei für den Fall, dass das eine Teilsystem (Ta, Tb) ausfällt, das andere Teilsystem (Ta, Tb) die Prozesssteuerung übernimmt. Es werden Maßnahmen vorgeschlagen, mittels welcher die Verfügbarkeit des redundanten Automatisierungssystems (As) erhöht und im Falle nicht lokalisierbarer Fehler im Hinblick auf die Entscheidung, welches der Teilsysteme (Ta, Tb) die Prozesssteuerung zu übernehmen hat, die Restfehlerrate minimiert wird.

## Beschreibung

Die Erfindung betrifft ein Verfahren zum Betreiben eines redundanten, mit einem ersten und einem zweiten Teilsystem versehenen Automatisierungssystems, welche während der Steuerung eines technischen Prozesses jeweils ein Steuerprogramm ereignissynchron verarbeiten, wobei die Teilsysteme sich über Kommunikationsmittel miteinander synchronisieren, wobei ferner eines dieser Teilsysteme die Prozesssteuerung übernimmt und wobei für den Fall, dass das eine Teilsystem ausfällt, das andere Teilsystem die Prozesssteuerung übernimmt. Darüber hinaus betrifft die Erfindung ein redundantes Automatisierungssystem gemäß dem Oberbegriff des Anspruchs 4.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von demjenigen der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Aus dem Siemens-Katalog PCS 7, Kapitel 8, Ausgabe 2014/15 ist ein redundantes, aus zwei Teilsystemen bestehendes Automatisierungssystem bekannt, welches dazu vorgesehen ist, die Verfügbarkeit einer zu steuernden Anlage zu erhöhen. Dazu ist das Automatisierungssystem mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms des zu steuernden technischen Prozesses an einem Meldeeingang des Automatisierungssystems anliegt, wird das laufende Programm an einem Wartepunkt angehalten und ein Programm gestartet, das zur Analyse des Alarms und zum Einleiten von Maßnahmen vorgesehen ist, welche die Ursache des Alarms beheben. Dieses Automatisierungssystem wird regelmäßig synchronisiert und es kann daher weitgehend sichergestellt werden, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann. Für den Fall dagegen, dass z. B. ein auf einem ersten Teilsystem aufgetretenes Ereignis nicht mit einem zweiten Teilsystem eines zwei Teilsysteme umfassenden Automatisierungssystems synchronisiert werden kann und nach der Bearbeitung des Ereignisses durch das erste Teilsystem dieses Teilsystem ausfällt, kann der Verlauf eines zu steuernden technischen Prozesses gestört werden; denn das zweite Teilsystem durchläuft - ohne Kenntnis des Ereignisses - einen anderen, die Ausführungs-Reihenfolge der Programme repräsentierenden Programmpfad als den, welchen das zweite Teilsystem in Kenntnis des Ereignisses durchlaufen würde und der auch erforderlich wäre, um den genannten Verlauf des zu steuernden technischen Prozesses nicht zu stören.

Die beiden Teilsysteme können sich in der Art und Weise synchronisieren, dass an geeigneten Programmstellen, an denen ein Abgleich vorgesehen ist, beide Teilsysteme auf eine über die Synchronisationsverbindung übermittelte Antwort des jeweils anderen Teilnehmers warten und erst dann jeweils ihre weitere Prorammverarbeitung fortsetzen. Dabei kann es aufgrund eines Hardware-Defekts, beispielsweise in Form eines Speicherfehlers in einem der Teilsysteme, vorkommen, dass die Teilsysteme sich nicht synchronisieren können. In diesem Fall wird zunächst z. B. mittels geeigneten Hard- und/oder Firmware-Diagnosemechanismen, Selbsttests oder sonstigen geeigneten Maßnahmen versucht, möglichst schnell das gestörte bzw. fehlerhaft arbeitende Teilsystem zu erkennen bzw. zu lokalisieren, wobei nach dieser Lokalisierung schließlich das gestörte Teilsystem gestoppt wird und das andere Teilsystem die Prozessteuerung (Masterschaft) übernimmt.
Für den Fall, dass das fehlerhafte Teilsystem nicht lokalisiert werden kann, z. B. aufgrund von nicht diagnostizierbaren sporadisch auftretenden Fehlern oder Ereignissen, wird eine Zufallsentscheidung getroffen, welches der beiden Teilsystem zu stoppen ist und welches die Steuerung des Prozesses fortführen soll. Wurde eine falsche Entscheidung getroffen, wird das korrekt arbeitende System in Stopp gesetzt, das fehlerhafte arbeitet gewöhnlich zunächst noch weiter, bis es aufgrund des Fehlers ausfällt, was einen Totalausfall des redundant ausgebildeten Automatisierungssystems bedeutet.

Der Erfindung liegt daher die Aufgabe zugrunde, ein Verfahren der eingangs genannten Art anzugeben, welches die Verfügbarkeit des Automatisierungssystems verbessert. Darüber hinaus ist ein redundantes Automatisierungssystem zu schaffen, welches zur Durchführung des Verfahrens geeignet ist.

Diese Aufgabe wird im Hinblick auf das Verfahren dadurch gelöst, dass mindestens eine eine Störungswahrscheinlichkeit beeinflussende Kenngröße für jedes der Teilsysteme erfasst wird und dass im Falle nicht lokalisierbarer Fehler in den Teilsystemen die erfassten Kenngrößen der Teilsysteme für eine Entscheidung herangezogen werden, welches der Teilsysteme die Prozesssteuerung übernimmt.
Bezüglich des redundanten Automatisierungssystems wird diese Aufgabe durch die im kennzeichnenden Teil des Anspruchs 4 angegebenen Maßnahmen gelöst.

Vorteilhaft ist, dass im Bezug auf die Entscheidung, welches der Teilsystem zu stoppen ist und welches die Prozesssteuerung übernimmt, die Restfehlerrate minimiert wird.

Aufgrund der räumlichen Trennung der Teilsysteme, die häufig mehrere Kilometer voneinander entfernt eingesetzt werden, beispielweise in Tunnelbauwerken für Schienenfahrzeuge, sind gewöhnlich die die Störungswahrscheinlichkeit beeinflussenden Kenngrößen der Teilsysteme sehr unterschiedlich. Werden diese Kenngrößen, z. B. die Umgebungstemperaturen, an den unterschiedlichen Einsatzorten des jeweiligen Teilsystems erfasst und für die Entscheidung herangezogen bzw. berücksichtigt, erhöht sich die Verfügbarkeit des redundanten Automatisierungssystems.

In einer Ausgestaltung der Erfindung ist vorgesehen, als Kenngrößen die Betriebsstunden oder Betriebszeiträume und/oder Ein- und Ausschaltzyklen und/oder Vibrations- und/oder Schockbelastungen und/oder Einbau -/ und/oder Höhenlage des jeweiligen Teilsystems zu berücksichtigen. Beispielsweise beeinträchtigen die Betriebsstunden oder die Ein- und Ausschaltzyklen des jeweiligen Teilsystems oder dessen Hardwarekomponenten die Lebensdauer des jeweiligen Teilsystems. Falls die Betriebsstunden oder die Anzahl von Ein- und Ausschaltzyklen eines der Teilsysteme größer sind als die des anderen Teilsystems, so ist die Wahrscheinlichkeit, dass das eine Teilsystem fehlerhaft arbeitet, groß. In diesem Fall wird entschieden, das eine Teilsystem zu stoppen und dem anderen Teilsystem die Prozesssteuerung zu überlassen.
Auch für den Fall, dass für eines der Teilsysteme die Vibrations- und/oder Schockbelastungen, welche sich z. B. auf die internen und externen Steckverbindungen des jeweiligen Teilsystems auswirken, größer sind als die des anderen Teilsystems, wird entschieden, das eine Teilsystem zu stoppen und dem anderen Teilsystem die Prozesssteuerung zu überlassen.

In einer weiteren Ausgestaltung der Erfindung sind als Kenngrößen Umwelteinflüsse (Umweltbedingungen) vorgesehen. Beispielsweise fließt die Konzentration eines schädlichen Gases oder die Umgebungstemperatur in die Entscheidung ein, welches der Teilsysteme den technischen Prozess weiter steuert und welches der Teilsysteme gestoppt wird.

Selbstverständlich können im Hinblick auf die Entscheidungsfindung die Kenngrößen unterschiedlich gewichtet und/oder kombiniert werden.

Beispielsweise für den Fall, dass zwei Teilsysteme nicht synchron arbeiten bzw. die Verarbeitung der Steuerprogramme "auseinanderläuft" und keine Fehler auf den Teilsystemen diagnostiziert werden können, kann die Entscheidung, welches der Teilsysteme den technischen Prozess weiter steuert und welches der Teilsysteme gestoppt wird, in der folgenden Art und Weise getroffen werden:
A) Es werden die aktuell erfassten Kenngrößen (Sensorik-Werte) der beiden Teilsysteme miteinander verglichen. Befindet sich eines der beiden Teilsysteme z. B. in einem kritischen Temperaturbereich oder wurde dieses Teilsystem gerade einer Schockbelastung ausgesetzt, so ist die Wahrscheinlichkeit hoch, dass in diesem Teilsystem der Fehler aufgetreten ist.
B) Aus den über die gesamte Betriebszeit oder einen längeren Betriebszeitraum der beiden Teilsysteme erfassten Kenngrößen (Werte für Temperatur, Vibration/Schock, ...) und einem Zuverlässigkeitsmodell werden Ausfallwahrscheinlichkeiten für die beiden Teilsysteme bestimmt.
   a) In das Zuverlässigkeitsmodell können unter anderem einfließen:
      i) z. B. die Temperaturverteilung innerhalb des Systems (wird während der Entwicklung vom Hersteller ausgemessen und kontrolliert); damit ist die Temperatur am Ort jedes einzelnen der Bauteile bekannt;
      ii) das hinterlegte bauteilspezifische Ausfallverhalten,
   b) Die Berechnung bzw. Aktualisierung der Ausfallwahrscheinlichkeiten erfolgt fortlaufend über die gesamte Betriebszeit oder Betriebszeitintervalle hinweg (z. B. alle x Minuten). Die Ergebnisse für beide Teilsysteme werden auch in beiden Teilsystemen hinterlegt, so dass bei einer "Asynchronität", in beiden Teilsystemen schnell und zuverlässig die Entscheidungsgrundlagen vorliegen.
C) In die Entscheidungsfindung, welches der Teilsystem zu stoppen ist und welches den Prozess weiter steuert, fließen nach den Vorgaben des Herstellers der Teilsysteme die Ergebnisse aus A oder die Ergebnisse aus A und B oder die Ergebnisse aus A und B mit vorgegebener, geeigneter Gewichtung der Ergebnisse aus A und B ein. Selbstverständlich kann der Hersteller einem Anwender eine Auswahl bereitstellen, mittels welcher der Anwender einstellen kann, wie die Ergebnisse A, B in die Entscheidungsfindung einfließen sollen.

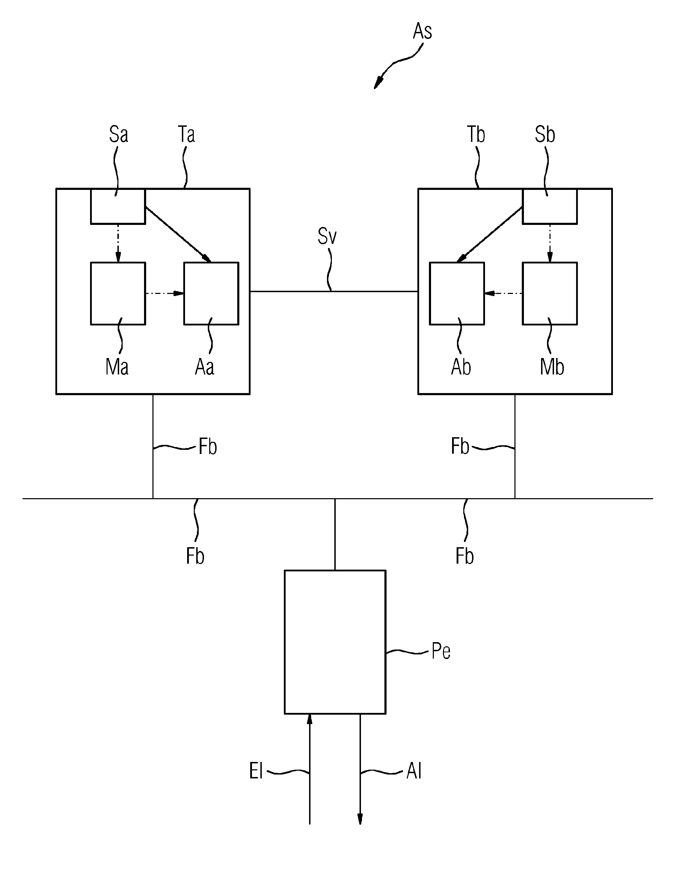

Die Erfindung wird nachfolgend anhand eines Ausführungsbeispiels unter Bezugnahme auf die einzige Figur der Zeichnung näher erläutert. Die Figur der Zeichnung zeigt in vereinfachter Darstellung ein redundantes Automatisierungssystem.

Bestandteile eines mit As bezeichneten, redundanten Automatisierungssystems sind ein erstes Teilsystem Ta, ein zweites Teilsystem Tb sowie eine über einen Feldbus Fb mit den Teilsystemen Ta, Tb verbundene Peripherieeinheit Pe. Der Feldbus Fb genügt beispielsweise der PROFIBUS-DP-Spezifikation, wobei prinzipiell auch andere Bussysteme, z. B. Ethernet, Fieldbus, Modbus oder aber auch parallele Bussysteme geeignet sind. Die Peripherieeinheit Pe erhält über Eingangsleitungen El Signale von Messumformern oder Messwertgebern, die zur Erfassung eines Prozesszustands dienen, und gibt über Ausgangsleitungen Al Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme Ta, Tb arbeiten zyklisch und synchron dasselbe Steuerprogramm ab. Zu ihrer Synchronisation ist eine Synchronisationsverbindung Sv vorgesehen, wobei die Redundanz- und Überwachungsfunktionen durch geeignete Synchronisationsmittel und über diese Synchronisationsverbindung Sv verwirklicht werden.

Um die Verfügbarkeit des redundanten Automatisierungssystems As zu erhöhen und darüber hinaus im Falle nicht lokalisierbarer Störungen bzw. Fehler die Entscheidung zu erleichtern, welches der Teilsystem Ta, Tb zu stoppen ist und welches die Prozesssteuerung zu übernehmen hat, weist jedes der Teilsysteme Ta, Tb geeignete Mittel Sa, Sb zum Erfassen seiner Störungswahrscheinlichkeit beeinflussenden Kenngrößen sowie geeignete Einheiten Aa, Ab zum Auswerten dieser erfassten Kenngrößen auf. Die jeweiligen Erfassungsmittel Sa, Sb führen den jeweiligen Auswerteeinheiten Aa, Ab die erfassten Kenngrößen zu, wobei jede der Auswerteeinheiten Aa, Ab die ihr zugeführten Kenngrößen oder ein diese Kenngrößen repräsentierendes Signal der jeweiligen anderen Auswerteeinheit Aa, Ab über die Synchronisationsverbindung Sv übermittelt. Dadurch werden die Auswerteeinheiten Aa, Ab jedes der Teilsysteme Ta, Tb in die Lage versetzt, die eigenen, aktuellen Kenngrößen mit denen des anderen Teilsystems Ta, Tb zu vergleichen. In Abhängigkeit des mittels der Auswerteeinheit Aa ermittelten Vergleichsergebnisses entscheidet diese Auswerteinheit Aa, ob das Teilsystem Ta die Prozesssteuerung zu übernehmen hat oder ob das Teilsystem Ta in einen Stopp-Zustand gefahren wird. In der entsprechenden Art und Weise entscheidet die Auswerteeinheit Ab in Abhängigkeit des mittels der Auswerteeinheit Ab ermittelten Vergleichsergebnisses, ob das Teilsystem Tb die Prozesssteuerung zu übernehmen hat oder ob das Teilsystem Tb einen Stopp-Zustand einzunehmen hat.

Im vorliegenden Ausführungsbeispiel wird im Folgenden angenommen, dass für jedes Teilsystem Ta, Tb als Kenngröße lediglich die Temperatur erfasst wird und die Erfassungsmittel Sa, Sb daher als Temperatursensoren ausgebildet sind. Ferner wird angenommen, dass die jeweiligen Sensoren Sa, Sb ein der jeweils aktuell erfassten Temperatur entsprechendes Signal nicht direkt den jeweiligen Auswerteeinheiten Aa, Ab zuführen, sondern jeweiligen Zuverlässigkeitsmodellen Ma, Mb der Teilsysteme Ta, Tb, was in der Zeichnung mit gestrichelten Linien dargestellt ist. In diesen Modellen Ma, Mb sind neben diesen aktuell erfassten Temperaturwerten die jeweiligen über einen längeren Betriebszeitraum erfassten Temperaturwerte der Teilsysteme Ta, Tb, die vom Hersteller der jeweiligen Teilsysteme Ta, Tb ermittelte Temperaturverteilung in diesen Teilsystemen Ta, Tb und das bauteilspezifische temperaturabhängige Ausfallverhalten hinterlegt. Aus diesen hinterlegten Informationen ermittelt das jeweilige Modell Ma, Mb die aktuelle Ausfallwahrscheinlichkeit des jeweiligen Teilsystems Ta, Tb, wobei die Ausfallwahrscheinlichkeiten den jeweiligen Auswerteeinheiten Aa, Ab zugeführt werden. Jede der Auswerteeinheiten Aa, Ab übermittelt die ihr zugeführte Ausfallwahrscheinlichkeit oder ein diese Ausfallwahrscheinlichkeit repräsentierendes Signal der jeweiligen anderen Auswerteeinheit Aa, Ab über die Synchronisationsverbindung Sv, um zu ermöglichen, dass jede der Auswerteeinheiten Aa, Ab die Ausfallwahrscheinlichkeiten der beiden Teilsystems Ta, Tb vergleicht. Wie beschrieben, entscheidet in Abhängigkeit des mittels der Auswerteeinheit Aa ermittelten Vergleichsergebnisses diese Auswerteinheit Aa, ob das Teilsystem Ta die Prozesssteuerung zu übernehmen hat oder ob das Teilsystem Ta in einen Stopp-Zustand gefahren wird. In der entsprechenden Art und Weise entscheidet die Auswerteeinheit Ab in Abhängigkeit ihres ermittelten Vergleichsergebnisses, ob das Teilsystem Tb die Prozesssteuerung zu übernehmen hat oder ob das Teilsystem Tb einen Stopp-Zustand einzunehmen hat.

Unabhängig davon, ob die Sensorwerte direkt ausgewertet oder über die Modelle Ma, Mb verarbeitet werden, wird die Verfügbarkeit des Automatisierungssystems As erhöht, wobei die Entscheidungsfindung im Falle nicht diagnostizierbarer oder nicht zu diagnostizierender Fehler bezüglich der Synchronisation der beiden Teilsysteme Ta, Tb verbessert wird.

## Patentansprüche

1. Verfahren zum Betreiben eines redundanten, mit einem ersten und einem zweiten Teilsystem (Ta, Tb) versehenen Automatisierungssystems (As), welche während der Steuerung eines technischen Prozesses jeweils ein Steuerprogramm synchron verarbeiten, wobei
- die Teilsysteme (Ta, Tb) sich über Kommunikationsmittel miteinander synchronisieren,
- eines dieser Teilsysteme (Ta, Tb) die Prozesssteuerung übernimmt, und
- für den Fall, dass das eine Teilsystem (Ta, Tb) ausfällt, das andere Teilsystem (Ta, Tb) die Prozesssteuerung übernimmt,
**dadurch gekennzeichnet, dass** mindestens eine eine Störungswahrscheinlichkeit beeinflussende Kenngröße für jedes der Teilsysteme (Ta, Tb) erfasst wird und dass im Falle nicht lokalisierbarer Fehler in den Teilsystemen (Ta, Tb) die erfassten Kenngrößen der Teilsysteme (Ta, Tb) für eine Entscheidung herangezogen werden, welches der Teilsysteme (Ta, Tb) die Prozesssteuerung übernimmt.

2. Verfahren nach Anspruch 1, **dadurch gekennzeichnet, dass** als Kenngröße Betriebsstunden oder Betriebszeitintervalle und/oder Ein- und Ausschaltzyklen und/oder Vibrations- und/oder Schockbelastungen und/oder Einbau-/ und/oder Höhenlage des jeweiligen Teilsystems verwendet werden.

3. Verfahren nach Anspruch 1 oder 2, **dadurch gekennzeichnet, dass** als Kenngröße Umwelteinflüsse verwendet werden.

4. Redundantes mit einem ersten und einem zweiten Teilsystem (Ta, Tb) versehenes Automatisierungssystem (As), welche während der Steuerung eines technischen Prozesses jeweils ein Steuerprogramm synchron verarbeiten, wobei
- die Teilsysteme (Ta, Tb) sich über Kommunikationsmittel miteinander synchronisieren,
- eines dieser Teilsysteme (Ta, Tb) die Prozesssteuerung übernimmt, und
- für den Fall, dass das eine Teilsystem (Ta, Tb) ausfällt, das andere Teilsystem (Ta, Tb) die Prozesssteuerung übernimmt,
**dadurch gekennzeichnet, dass** jedes der Teilsysteme (Ta, Tb) dazu ausgebildet ist, mindestens eine eine Störungswahrscheinlichkeit beeinflussende Kenngröße zu erfassen und dem anderen Teilnehmer (Ta, Tb) zu übermitteln, und dass jedes der Teilsysteme (Ta, Tb) ferner dazu ausgebildet ist, im Falle nicht lokalisierbarer Fehler in den Teilsystemen (Ta, Tb) die erfassten Kenngrößen der Teilnehmer (Ta, Tb) für eine Entscheidung heranzuziehen, die Prozesssteuerung zu übernehmen.

5. Redundantes Automatisierungssystem nach Anspruch 4, **dadurch gekennzeichnet, dass** die Teilsysteme (Ta, Tb) ferner dazu ausgebildet sind, als Kenngröße Betriebsstunden oder Betriebszeitintervalle und/oder Ein- und Ausschaltzyklen und/oder Vibrations- und/oder Schockbelastungen und/oder Einbau-/ und/oder Höhenlage des jeweiligen Teilsystems heranzuziehen.

6. Redundantes Automatisierungssystem nach Anspruch 4 oder 5, **dadurch gekennzeichnet, dass** die Teilsysteme (Ta, Tb) dazu ausgebildet sind, als Kenngröße Umwelteinflüsse heranzuziehen.

7. Teilsystem für ein redundantes Automatisierungssystem (As) nach einem der Ansprüche 4 bis 6.
